(19) Europäisches Patentamt
European Patent Office
Office européen des brevets

(11) EP 2 180 355 A1

(12) EUROPEAN PATENT APPLICATION

(43) Date of publication:
28.04.2010 Bulletin 2010/17

(51) Int Cl.:
G02B 1/11 (2006.01)     G02B 1/10 (2006.01)

(21) Application number: 09013318.2

(22) Date of filing: 21.10.2009

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA RS

(30) Priority: 23.10.2008 JP 2008272812
03.06.2009 JP 2009133782
04.09.2009 JP 2009204431

(71) Applicant: Seiko Epson Corporation
Tokyo 163-0811 (JP)

(72) Inventors:
• Fukui, Tomohito
Nagano 392-8502 (JP)
• Nishimoto, Keiji
Nagano 392-8502 (JP)
• Noguchi, Takashi
Nagano 392-8502 (JP)

(74) Representative: HOFFMANN EITLE
Patent- und Rechtsanwälte
Arabellastrasse 4
81925 München (DE)

(54) **Multilayer antireflection layer, method for producing the same, and plastic lens**

(57) A multilayer antireflection layer includes a high refractive index layer and a low refractive index layer that are laminated alternately, the high reflective index layer having a grain boundary, and particles forming the grain boundary having an average particle diameter of 30 nm or less.

FIG. 1

EP 2 180 355 A1

**Description**

BACKGROUND

1. Technical Field

The present invention relates to a multilayer antireflection layer containing a high refractive index layer and a low refractive index layer laminated alternately, a method for producing the multilayer antireflection layer, and a plastic lens having the multilayer antireflection layer formed on a substrate.

2. Related Art

A plastic lens for spectacles generally has on the surface thereof a hard-coat layer for preventing scratches and an antireflection layer. The hard-coat layer is formed on the surface of the lens substrate, and the antireflection layer is formed on the surface of the hard-coat layer. A so-called multilayer antireflection layer, which contains substances having different refractive indices laminated alternately, is generally used as the antireflection layer. Known examples of the multilayer antireflection layer include a multilayer antireflection layer having a high refractive index layer that forms a grain boundary (see, for example, JP-A-2007-279203). JP-A-2007-279203 states that by using the multilayer antireflection layer, such a lens for spectacles can be provided that suffers less distortion under a high humidity environment and has excellent scratch resistance.
However, the lens for spectacles disclosed in JP-A-2007-279203 is still insufficient in scratch resistance.

SUMMARY

An advantage of some aspects of the invention is to provide a multilayer antireflection layer that has a grain boundary and has excellent scratch resistance, a method for producing the multilayer antireflection layer, and a plastic lens having the multilayer antireflection layer formed thereon.
In an aspect of the invention, a multilayer antireflection layer is provided that contains a high refractive index layer and a low refractive index layer that are laminated alternately. The high reflective index layer has a grain boundary, and particles forming the grain boundary have an average particle diameter of 30 nm or less.
According to the multilayer antireflection layer of the aspect of the invention, the high reflective index layer has a grain boundary, and particles forming the grain boundary have an average particle diameter of 30 nm or less, whereby the high refractive index layer has an increased density to enhance the scratch resistance thereof significantly.
It is preferred that the average particle diameter of the particles forming the grain boundary is from 14 to 30 nm, more preferably from 20 to 30 nm, further preferably from 20 to 27 nm, and particularly preferably from 20 to 25 nm.
According to this configuration, the average particle diameter of the particles forming the grain boundary is from 14 to 30 nm, whereby such a multilayer antireflection layer can be provided that has both scratch resistance and impact resistance.
It is preferred that the high refractive index layer contains at least one of zirconium oxide, tantalum oxide and niobium oxide.
According to this configuration, the high refractive index layer contains at least one of zirconium oxide, tantalum oxide and niobium oxide, whereby the high refractive index layer can be hardened, and thus such a multilayer antireflection layer can be provided that has both scratch resistance and impact resistance.
It is preferred that the low refractive index layer contains silicon oxide.
According to this configuration, the low refractive index layer contains silicon oxide, whereby such a multilayer antireflection layer can be provided that has both scratch resistance and impact resistance.
In another aspect of the invention, a plastic lens is provided that contains a plastic lens substrate having formed thereon the multilayer antireflection layer.
According to the plastic lens of the aspect of the invention, such a plastic lens can be provided that has increased scratch resistance owing to the multilayer antireflection layer formed thereon.
In still another aspect of the invention, a method for producing the multilayer antireflection layer of the aspect of the invention is provided. The method contains forming the high refractive index layer by a dry film forming method.
Known examples of the method for forming a thin film include a wet film forming method and a dry film forming method. A sol-gel method is ordinarily employed as the wet film forming method, but according to the method, an organic substance may remain inside the thin film upon forming an oxide by heating the gel. The organic substance remaining may prevent the hardness of the thin film from being increased sufficiently, thereby decreasing the scratch resistance thereof. Upon forming the thin film on a surface of a plastic substrate, in particular, the heating temperature of the gel cannot be sufficiently high, and an organic substance is liable to remain inside the thin film. Consequently, a thin film that is formed on a surface of a plastic substrate by a wet method, such as a sol-gel method, has considerably low hardness and thus has deteriorated scratch resistance.

In the aspect of the invention, the high refractive index layer is formed by a dry film forming method, whereby such a multilayer antireflection layer can be provided that is dense and hard and has excellent scratch resistance, as compared to one formed by a wet method, such as a sol-gel method. It is more effective that not only the high refractive index layer but also the low refractive index layer are formed by a dry film forming method. The dry film forming method is low in environmental load since the dry film forming method does not use a solvent, which is necessarily used in the wet film forming method.

Examples of the dry film forming method include a physical vapor phase deposition method (PVD, such as vapor deposition, sputtering and ion plating) and a chemical vapor phase deposition method (CVD). Among these, an ion assisted vapor deposition method is preferred in the aspect of the invention. In the case where the thin film is formed by an ion assisted vapor deposition method, the density of the high refractive index layer can be increased, whereby such a multilayer antireflection layer can be provided that has both scratch resistance and impact resistance.

BRIEF DESCRIPTION OF THE DRAWINGS

The invention will be described with reference to the accompanying drawings, wherein like numbers reference like elements.

Fig. 1 is a schematic cross sectional view showing a plastic lens for spectacles according to an embodiment of the invention.

Fig. 2 is a schematic illustration showing an example of a vapor deposition apparatus used in the embodiment of the invention.

DESCRIPTION OF EXEMPLARY EMBODIMENTS

Hereinafter, embodiments of the invention will be described with reference to the drawings.

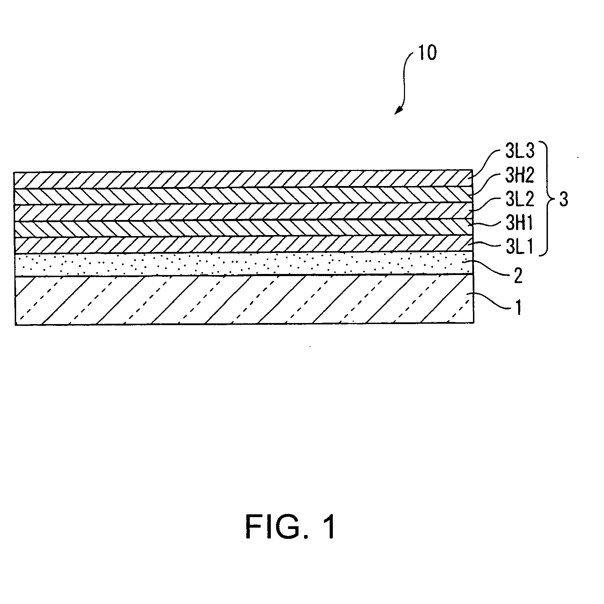

Fig. 1 is a schematic cross sectional view showing a plastic lens for spectacles 10 according to an embodiment of the invention. The plastic lens for spectacles 10 has a transparent plastic lens substrate 1, a hard-coat layer 2 for preventing scratch from being formed, and a multilayer antireflection layer 3, which is an optical multilayer film containing seven layers. The hard-coat layer 2 may be omitted, and the antireflection layer 3 may be formed directly on the lens substrate 1.

1. Lens Substrate

Examples of a resin forming the substrate 1 include transparent plastics, such as a (meth)acrylic resin, a thiourethane resin, an allyl resin, an episulfide resin, a polycarbonate resin, a polystyrene resin, a diethylene glycol bisallyl carbonate resin (CR-39), a polyvinyl chloride resin and a halogen-containing copolymer.

The substrate 1 preferably has a refractive index of 1.6 or more for adapting to the refractive index of the hard-coat layer 2 that contains titanium oxide. Preferred examples of the resin include an allyl carbonate resin, an acrylate resin, a methacrylate resin, a thiourethane resin and an episulfide resin, and among these, a thiourethane resin and an episulfide resin are particularly preferred from the standpoint of refractive index.

2. Hard-coat Layer

The hard-coat layer 2 may be formed of an organic material solely, an inorganic material solely or a composite material of them, and a composite material is preferably used since high hardness can be obtained, and the refractive index can be controlled. The refractive index of the hard-coat layer 2 may be controlled to a value equivalent to the refractive index of the substrate 1, thereby preventing formation of interference fringes and decrease in transmittance, which occur due to reflection at the interface between the hard-coat layer 2 and the substrate 1.

Specifically, a hard-coat liquid for forming the hard-coat layer 2 preferably contains the component (A) and the component (B) shown below, whereby the hard-coat layer has sufficient hardness after curing. The term "lens substrate" may include the hard-coat layer in some cases.

The component (A) is an organic silicon compound represented by the general formula $R_1SiX_{13}$ (wherein $R_1$ represents an organic group having a reactive group capable of undergoing polymerization, such as a hydrocarbon group having from 1 to 6 carbon atoms; and $X_1$ represents a hydrolyzable group).

The component (B) is inorganic oxide particles containing titanium oxide having a rutile type crystalline structure.

The component (B) is preferably rutile type titanium oxide particles having a particle diameter of from 1 to 200 $\mu$m. The hard-coat layer is preferably formed of a composite material containing, in addition to the rutile type titanium oxide particles, metallic oxide particles of silicon, tin, zirconium or antimony having a particle diameter of from 1 to 200 $\mu$m or composite oxide particles thereof combined thereto, for controlling the refractive index.

In the case where titanium is used as the inorganic material, it is preferred to use composite oxide particles having such a structure that titanium oxide having a rutile type crystalline structure or titanium oxide is enclosed with silicon dioxide, for preventing deterioration in light resistance of the hard-coat layer 2 and the substrate 1 (specifically, decrease in transmittance due to yellowing, separation of layers due to deterioration of the interfaces, and the like) due to the light activity of titanium. It is preferable that the thickness of the hard-coat layer 2 is several $\mu$m from the standpoint of less scratches.

A primer layer may be provided between the substrate 1 and the hard-coat layer 2 for enhancing adhesion between the substrate 1 and the hard-coat layer 2.

3. Multilayer Antireflection Layer

As shown in Fig. 1, the multilayer antireflection layer 3 has a five-layer structure containing low refractive index layers 3L1, 3L2 and 3L3 and high refractive index layers 3H1 and 3H2 that are laminated alternately.

The low refractive index layers 3L1, 3L2 and 3L3 may be formed by an ordinary vapor deposition method in such a temperature range that the plastic lens substrate is not deformed, and in this embodiment, are silicon oxide layers ($SiO_2$ layers).

Examples of a material that can be used as the high refractive index layers 3H1 and 3H2 include $ZrO_2$ (zirconium oxide), $Ta_2O_5$ (tantalum oxide) and $Nb_2O_5$ (niobium oxide).

The multilayer antireflection layer 3 can be formed on the substrate 1 or the hard-coat layer 2 with an ordinary ion assisted electron beam vapor deposition (IAD) apparatus.

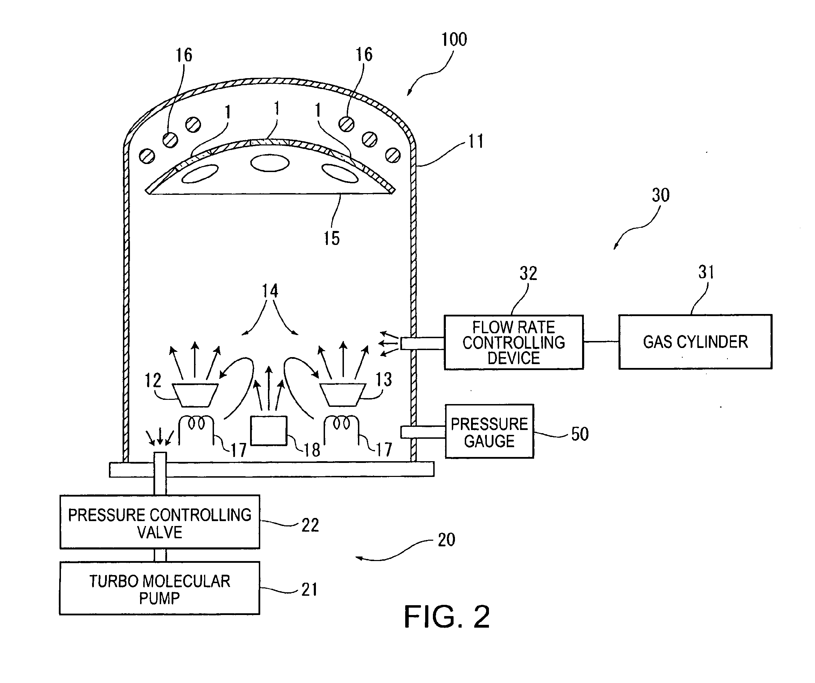

Fig. 2 is a schematic illustration showing a vapor deposition apparatus 100 used for producing the antireflection layer 3 of the embodiment. As shown in Fig. 2, the vapor deposition apparatus 100 is a so-called electron beam vacuum deposition device containing a vacuum chamber 11, an evacuating device 20 and a gas feeding device 30. The evacuating device 20 contains a turbo molecular pump 21 and a pressure controlling valve 22, and the gas feeding device 30 contains a gas cylinder 31 and a flow rate controlling device 32. A pressure gauge 50 is provided at the lower part of the vacuum chamber 11.

The vacuum chamber 11 has inside evaporation sources (crucibles) 12 and 13 having vapor deposition materials placed therein, a heating unit 14 for heating and melting (evaporating) the vapor deposition materials in the evaporation sources 12 and 13, a substrate pedestal 15 having the substrate 1 placed thereon, a heater 16 for heating the substrate 1, a filament 17, an ion gun 18 for ionizing a gas introduced and accelerating and radiating the ionized gas to the substrate 1, and the like. A cold trap for removing water remained in the vacuum chamber 11, a device for managing the thickness of the layers, and the like may be provided in the vacuum chamber 11 depending on necessity.

The evaporation sources 12 and 13 are crucibles having vapor deposition materials placed therein, and disposed at the lower part of the vacuum chamber 11.

The heating unit 14 accelerates and deflects thermal electrons, which are generated with heat from the filament 17, with an electron gun, whereby the thermal electrons are radiated on the vapor deposition materials placed in the evaporation sources 12 and 13, thereby evaporating the vapor deposition materials. Accordingly, so-called electron beam vapor deposition is performed. The acceleration electric current is not particularly limited and can be controlled in relation to the necessary vapor deposition rate in consideration of the close correlation between the acceleration electric current and the vapor deposition rate.

Other examples of the method for evaporating the vapor deposition material include a method of melting and evaporating the vapor deposition material by electrifying a resistive material, such as tungsten (i.e., so-called resistance heating vapor deposition), and a method of radiating high energy laser light to a material to be evaporated.

The substrate pedestal 15 is a pedestal, on which a prescribed number of the substrates 1 are placed, and is disposed at the upper part of the vacuum chamber 11 to face the evaporation sources 12 and 13. The substrate pedestal 15 preferably has a rotation mechanism for ensuring uniformity of the antireflection layer 3 formed on the substrate 1 and for enhancing the mass productivity.

The heater 16 for heating the substrate contains, for example, an infrared lamp, and is disposed above the substrate pedestal 15. The heater 16 for heating the substrate degasses the substrate 1 and evaporates water therefrom by heating the substrate 1, thereby ensuring adhesion of a layer formed on the surface of the substrate 1.

As the heater 16 for heating the substrate, a resistance heater or the like may be used instead of the infrared lamp, but an infrared lamp is preferably used in the case where the substrate 1 is formed of plastics.

The substrate 1 having the hard-coat layer 2 formed thereon is placed on the substrate pedestal 15 inside the vacuum chamber 11, and then the vacuum deposition apparatus 100 is operated to form the multilayer antireflection layer 3.

In general, zirconium oxide is obtained as an amorphous layer, but in this embodiment, the layers formed of zirconium oxide (zirconium oxide layers) 3H1 and 3H2 are formed as crystalline layers (containing polycrystals and having a grain boundary) by increasing the output power of the ion gun. Preferred conditions for forming the zirconium oxide layers 3H1 and 3H2 as crystalline layers are an acceleration voltage of from 400 to 1,000 V and an acceleration current of from 50 to 300 mA.

The particle diameter of the particles divided by the grain boundary is decreased by increasing the acceleration voltage or increasing the acceleration current. The particle diameter of the particles divided by the grain boundary is increased by decreasing the acceleration voltage or decreasing the acceleration current. According to the manners, the high refractive index layers (zirconium oxide layers) 3H1 and 3H2 can be controlled to be polycrystalline layers having a grain boundary and an average particle diameter of from 14 to 30 nm.

In the case where tantalum oxide or niobium oxide is used as the material for the high refractive index layer, the same conditions as in the case using zirconium oxide may be applied, thereby forming a high refractive index layer as a polycrystalline layer having a grain boundary and an average particle diameter of 30 nm or less.

The particle diameter and the average particle diameter of the particles can be obtained by measuring the unevenness on the vapor-deposited surface with an atomic force microscope. A specific measuring method will be described later.

A water repelling layer and an antifogging layer may be formed on the multilayer antireflection layer 3 depending on necessity.

According to the embodiment, following advantages may be obtained, for example.

The high refractive index layers (zirconium oxide layers) 3H1 and 3H2 constituting the multilayer antireflection layer 3 are polycrystalline layers having a grain boundary inside and having an average particle diameter of 30 nm or less, whereby the high refractive index layer has an increased density to enhance the scratch resistance thereof significantly.

The high refractive index layers (zirconium oxide layers) 3H1 and 3H2 constituting the multilayer antireflection layer 3 have an average particle diameter of the particles forming the grain boundary of from 14 to 30 nm, whereby such a multilayer antireflection layer can be provided that has both scratch resistance and impact resistance.

The average particle diameter is preferably 20 nm or more from the standpoint of impact resistance, and is preferably 27 nm or less and more preferably 25 nm or less from the standpoint of scratch resistance.

The high refractive index layers (zirconium oxide layers) 3H1 and 3H2 constituting the multilayer antireflection layer 3 are formed of zirconium oxide, whereby the high refractive index layer can be hardened, and thus such a multilayer antireflection layer can be provided that has both scratch resistance and impact resistance.

The high refractive index layers 3H1 and 3H2 are formed by a dry film forming method, whereby such a multilayer antireflection layer can be provided that is dense and hard and has excellent scratch resistance, as compared to one formed by a wet method, such as a sol-gel method. The embodiment is more effective since not only the high refractive index layers 3H1 and 3H2 but also the low refractive index layers 3L1, 3L2 and 3L3 are formed by a dry film forming method. The dry film forming method is low in environmental load since the dry film forming method does not use a solvent, which is necessarily used in the wet film forming method.

The ion assisted vapor deposition method is used as the dry film forming method, whereby the high refractive index layer has an increased density to provide a multilayer antireflection layer having both scratch resistance and impact resistance. Furthermore, the ion assisted vapor deposition method is a convenient vacuum vapor deposition method, and thus is advantageous in cost.

Zirconium oxide ($ZrO_2$) is used as the material constituting the high refractive index layer in this embodiment, but tantalum oxide ($Ta_2O_5$), niobium oxide ($Nb_2O_5$) and the like may be used instead. In the case where $Ta_2O_5$ or $Nb_2O_5$ is used as the material constituting the high refractive index layer, the same conditions as in the case using $ZrO_2$ may be used for providing a high refractive index layer as a polycrystalline layer having an average particle diameter of the particles forming a grain boundary of 30 nm or less.

The method for forming the multilayer antireflection layer is not particularly limited, and various methods, such as a high frequency sputtering method, a direct current sputtering method, a CVD method (chemical vapor phase deposition method) and an ion plating method, may be employed.

The invention will be described with reference to specific examples below. However, the invention is not limited to the examples, and various modifications and improvements capable of achieving the advantages of the invention are encompassed by the scope of the invention. In the examples, the numerals and symbols are the same as in the embodiments shown above.

Specifically, a multilayer antireflection layer was formed on a lens substrate for spectacles and then evaluated variously as shown below.

Example 1

A plastic lens for spectacles (Seiko Prestige, produced by Seiko Epson Corporation) having a substrate 1 having formed thereon a primer layer and a hard-coat layer 2 was used.

The plastic lens was degassed in the first chamber, which was not shown in the figure, set at a temperature of 60°C, and was subjected to ion cleaning for 2 minutes in the second chamber (vacuum deposition apparatus 100) under conditions of an acceleration voltage of 500 V, an acceleration current of 250 mA, a bias current of 380 mA and a flow rate of an oxygen introducing gas of 20 sccm.

The treatments were performed for cleaning the surface of the substrate, thereby enhancing adhesion between the substrate and the antireflection film.

The second chamber was then evacuated to high vacuum with a vacuum degree of $6.0 \times 10^{-4}$ Pa, and silicon oxide was vapor-deposited as the first layer. Thereafter, a zirconium oxide layer was deposited as the second layer by ion assisted vapor deposition at an acceleration voltage of 600 V, an acceleration current of 250 mA, a bias current of 375 mA, which was 1.5 times the acceleration current, and 20 sccm of argon gas introduced. Furthermore, silicon oxide was vapor-deposited as the third layer, a zirconium oxide layer was deposited as the fourth layer by ion assisted vapor deposition, and silicon oxide was vapor-deposited as the fifth layer.

After completing vapor deposition, 100% oxygen gas was introduced to the chamber, and plasma was generated with a high frequency plasma generator while maintaining the pressure at $4.0 \times 10^{-2}$ Pa. The conditions for generating plasma were 13.56 MHz and 400 W, and the treatment was performed for 2 minutes.

The treatment was performed for activating the surface of the antireflection film, thereby facilitating chemical bond to an antifouling film.

Thereafter, an antifouling layer was formed in the third chamber. The third chamber had a structure that was substantially the same as the second chamber (vapor deposition apparatus 100). Accordingly, the third chamber will be described based on the vacuum deposition apparatus 100. A fluorine-containing organic silicon compound (KY-130, a trade name, produced by Shin-Etsu Chemical Co., Ltd.) was used as an evaporation source. Specifically, KY-130 was diluted with a fluorine solvent (Novec HFE-7200, produced by Sumitomo 3M Co., Ltd.) to prepare a solution having a solid concentration of 3%, and 1 g of porous ceramic pellets were impregnated with the solution, followed by drying, to prepare evaporation sources 12 and 13 set in the third chamber.

Upon forming the film, the pellets as the evaporation sources were heated to 600°C with a halogen lamp as a heater, thereby evaporating the fluorine-containing organic silicon compound. The vapor deposition time was 3 minutes. After forming the antifouling layer, the opposite surface of the lens was subjected to the same treatment to form antifouling layers on both surfaces of the plastic lens for spectacles.

The period of time required for the sequence of operations for forming the layers, i.e., the operations of from degassing operation in the first chamber through formation of an antifouling layer on the opposite surface, was 45 minutes.

Example 2

The same procedures as in Example 1 were performed except that the conditions for ion assisted deposition for forming zirconium oxide layers as the second and fourth layers were changed to an acceleration voltage of 600 V, an acceleration current of 250 mA, a bias current of 375 mA, which was 1.5 times the acceleration current, and 20 sccm of oxygen gas introduced.

The period of time required for the sequence of operations for forming the layers, i.e., the operations of from degassing operation in the first chamber through formation of an antifouling layer on the opposite surface, was 45 minutes.

Example 3

The same procedures as in Example 2 were performed except that the vacuum degree in the second chamber upon starting formation of layers was changed to $1.5 \times 10^{-4}$ Pa.

The period of time required for the sequence of operations for forming the layers, i.e., the operations of from degassing operation in the first chamber through formation of an antifouling layer on the opposite surface, was 4 hours.

Example 4

The same procedures as in Example 1 were performed except that the conditions for ion assisted deposition for forming zirconium oxide layers as the second and fourth layers were changed to an acceleration voltage of 600 V, an acceleration current of 250 mA, a bias current of 375 mA, which was 1.5 times the acceleration current, and 20 sccm of nitrogen gas introduced.

The period of time required for the sequence of operations for forming the layers, i.e., the operations of from degassing operation in the first chamber through formation of an antifouling layer on the opposite surface, was 45 minutes.

Example 5

The same procedures as in Example 1 were performed except that the conditions for ion assisted deposition for forming zirconium oxide layers as the second and fourth layers were changed to an acceleration voltage of 700 V, an acceleration current of 250 mA, a bias current of 375 mA, which was 1.5 times the acceleration current, and 20 sccm of argon gas introduced.
The period of time required for the sequence of operations for forming the layers, i.e., the operations of from degassing operation in the first chamber through formation of an antifouling layer on the opposite surface, was 45 minutes.

Example 6

The same procedures as in Example 1 were performed except that the second and fourth layers were changed to tantalum oxide, and the second and fourth layers were formed by ion assisted vapor deposition under conditions of an acceleration voltage of 600 V, an acceleration current of 250 mA, a bias current of 375 mA, which was 1.5 times the acceleration current, and 20 sccm of oxygen gas introduced.
The period of time required for the sequence of operations for forming the layers, i.e., the operations of from degassing operation in the first chamber through formation of an antifouling layer on the opposite surface, was 45 minutes.

Example 7

The same procedures as in Example 1 were performed except that the second and fourth layers were changed to niobium oxide, and the second and fourth layers were formed by ion assisted vapor deposition under conditions of an acceleration voltage of 600 V, an acceleration current of 250 mA, a bias current of 375 mA, which was 1.5 times the acceleration current, and 20 sccm of oxygen gas introduced.
The period of time required for the sequence of operations for forming the layers, i.e., the operations of from degassing operation in the first chamber through formation of an antifouling layer on the opposite surface, was 45 minutes.

Comparative Example 1

The same procedures as in Example 1 were performed except that zirconium oxide layers as the second and fourth layers were vapor-deposited without ion assist.
The period of time required for the sequence of operations for forming the layers, i.e., the operations of from degassing operation in the first chamber through formation of an antifouling layer on the opposite surface, was 45 minutes.

Evaluation

The average particle diameter in the zirconium oxide layer was obtained in the following manner. The lens for spectacles was evaluated for scratch resistance and impact resistance. The results obtained are shown in Table 1.

Average Particle Diameter

A zirconium oxide layer was formed into a film having a thickness of 100 nm on a silicon wafer under the same conditions as in the vapor deposition process of zirconium oxide in Examples and Comparative Example, and the average particle diameter of particles formed with the grain boundary was measured with an atomic force microscope (hereinafter referred to as AFM), produced by SII NanoTechnology Inc. The specific procedures were as follows.

Method for measuring Average Particle Diameter

(1) Measurement of height of measuring cell

A measuring area in a square shape of 1 μm × 1 μm was set on a surface of a specimen. The edges of the square were each divided into 256 segments. Accordingly, 256 × 256 cells were set in the square area of 1 μm × 1 μm. The height (position) of each of the cells was measured with AFM.

(2) Setting Threshold Value

The zone of from the minimum height to the maximum height was divided into 256 sections, and the numbers of cells within each of the sections in height were counted. The height of the cell when 50% of the number of cells with respect to the total number of the cells had heights equal to or higher than a threshold value was designated as the initial threshold value. The ratio of the number of cells having heights equal to or higher than the threshold value with respect to the total number of the cells is referred to as a cumulative frequency distribution ratio. Accordingly, the initial value of the cumulative frequency distribution ratio is 50%.

(3) Calculation of Particle Total Area $S_T$

The particle total area $S_T$ is shown by the following expression:

$$S_T = \sum_{i=1}^{N} S_i$$

wherein Si represents the particle area, which is the area of cells having height equal to or higher than the threshold value, and N represents the number of the cells.

(4) Determination of Validity of Threshold Value

A value of the particle total area $S_T$ with respect to the area of the measured area (1 $\mu$m $\times$ 1 $\mu$m = 1 $\mu$m$^2$ in Examples) is designated as a particle area ratio.
The particle area ratio is preferably from 5 to 70% owing to the following reasons. In the case where the particle area ratio is less than 5%, the number of cells that are subjected to calculation of the particle total area $S_T$ is too small, and the sensitivity of the particle total area $S_T$ is lowered. In the case where the particle area ratio exceeds 70%, the area of the cells that are subjected to calculation of the particle total area $S_T$ is too large, and the accuracy of the particle total area $S_T$ is lowered.
In the case where the particle area ratio is from 5 to 70%, the subsequent procedure (5) is performed. In the case where the particle area ratio is less than 5%, the cumulative frequency distribution ratio in the procedure (2) is set smaller to increase the threshold value, and then the calculations in the procedures (3) and (4) are performed. In the case where the particle area ratio exceeds 70%, the cumulative frequency distribution ratio in the procedure (2) is set larger to decrease the threshold value, and then the calculations in the procedures (3) and (4) are performed.
The cumulative frequency distribution ratio is preferably from 40 to 80%. In this case, the threshold value satisfies the following expression:

```
minimum height + 0.4 × (maximum height - minimum height) ≤

                    threshold value ≤

minimum height + 0.8 × (maximum height - minimum height)
```

The cumulative frequency distribution ratio is preferably from 40 to 80% owing to the following reasons. In the case where the cumulative frequency distribution ratio is less than 40%, the number of cells that are subjected to calculation of the particle total area $S_T$ is too small, and the sensitivity of the particle total area $S_T$ is lowered. In the case where the cumulative frequency distribution ratio exceeds 80%, the area of the cells that are subjected to calculation of the particle total area $S_T$ is too large, and the accuracy of the particle total area $S_T$ is lowered.

(5) Average Area

The particle total area $S_T$ is divided by the number of cells to provide an average area $S_V$.

(6) Average Particle Diameter $D_V$

The average particle diameter $D_V$ under assumption that the particle is in a circular form is obtained by the following expression.

$$D_V = 2\sqrt{\frac{S_V}{\pi}}$$

Scratch Resistance

A test specimen (lens for spectacles) produced under the same conditions as in Examples and Comparative Examples and a standard lens (CR39, produced by Sunlux Co., Ltd.) were simultaneously scratched with a medium having a mass of 500 g reciprocated 600 times using a Bayer testing machine, produced by COLTS Laboratories (the conditions were the standard conditions designated by COLTS Laboratories). The scratched lenses were measured for haze value (with an automatic haze computer, produced by Suga Test Instruments Co., Ltd.), and the Bayer ratio R was calculated from the ratio of changes in haze value of the test specimen and the standard lens, thereby evaluating scratch resistance. The Bayer ratio R was calculated by the following expression:

```
R = |HST1 - HST0| / |HSA1 - HSA0|
```

wherein H represents the haze value; ST represents the standard lens; SA represents the lens for spectacles as a test specimen; 0 represents before the test; and 1 represents after the test.
A larger value for R means better scratch resistance. The medium used was hard sandy particles having a composition containing from 21 to 23% by mass of $ZrO_2$, from 73 to 77% by mass of $Al_2O_3$ and from 0.3 to 1.3% by mass of $HfO_2$.
The measurement was performed for three pieces each of the test specimen and the standard lens for calculating values of R, and the average value thereof was designated as a measured value.

Impact Resistance

A falling ball impact test according to the FDA Standard was performed. Specifically, a steel ball having a mass of 16.3 g was dropped from above vertically on a lens that was placed with the convex surface upward. The height of the steel ball when the lens was broken was measured. The plastic lens substrate measured had a thickness of 1.1 mm at the center of the lens.

Table 1

| | Average particle diameter (nm) | Bayer ratio R | Impact resistance | | Film forming time (hr) |
|---|---|---|---|---|---|
| | | | Height (cm) | FDA Standard | |
| Example 1 | 24.3 | 12.15 | 167 | passed | 0.75 |
| Example 2 | 28.8 | 11.10 | 167 | passed | 0.75 |
| Example 3 | 16.0 | 12.26 | 147 | passed | 4.00 |
| Example 4 | 26.1 | 12.03 | 167 | passed | 0.75 |
| Example 5 | 20.3 | 12.22 | 167 | passed | 0.75 |
| Example 6 | 18.5 | 14.15 | 147 | passed | 0.75 |
| Example 7 | 18.0 | 15.22 | 147 | passed | 0.75 |
| Comparative Example 1 | 30.2 | 5.62 | 187 | passed | 0.75 |

Evaluation Results

Examples 1, 2, 4 and 5 have an average particle diameter in the high refractive index layer of 30 nm or less, a high Bayer ratio and excellent impact resistance, and require a short period of time for forming the film.
Example 3 has a small average particle diameter of 16.0 nm and a high Bayer ratio, but has slightly lowered impact resistance, and requires a prolonged period of time of 4 hours for forming the film.

As a material for the high refractive index layer, tantalum oxide is used in Example 6, and niobium oxide is used in Example 7. The tantalum oxide layer and the niobium oxide layer have a smaller average particle diameter than the average particle diameter of the zirconium oxide layer, and thus have a higher Bayer ratio, which shows excellent scratch resistance.

On the other hand, Comparative Example 1 has impact resistance and a period of time required for forming the film that are equivalent to Examples 1 and 2, but has a significantly low Bayer ratio due to the large average particle diameter in the zirconium oxide layer, which shows deteriorated scratch resistance.

The invention can be applied to a plastic lens for spectacles, and can also be applied, for example, to antireflection of dust-proof glass, dust-proof quartz, a condenser lens, a prism and an optical disk, antireflection of a display device, antireflection of a solar cell, and an optical isolator.

**Claims**

1. A multilayer antireflection layer comprising a high refractive index layer and a low refractive index layer that are laminated alternately,
   the high reflective index layer having a grain boundary, and
   particles forming the grain boundary having an average particle diameter of 30 nm or less.

2. The layer according to claim 1, wherein the average particle diameter of the particles forming the grain boundary is from 14 to 30 nm.

3. The layer according to claim 1 or 2, wherein the high refractive index layer contains at least one of zirconium oxide, tantalum oxide and niobium oxide.

4. The layer according to claim 1, 2 or 3, wherein the low refractive index layer contains silicon oxide.

5. A plastic lens comprising a plastic lens substrate having formed thereon the multilayer antireflection layer according to any one of the claims 1 to 4.

6. A method for producing the multilayer antireflection layer according to any one of the claims 1 to 4, the method comprising:

   forming the high refractive index layer by a dry film forming method.

7. The method according to claim 6, wherein the dry film forming method is an ion assisted vapor deposition method.

FIG. 1

FIG. 2

Europäisches
Patentamt
European
Patent Office
Office européen
des brevets

# EUROPEAN SEARCH REPORT

Application Number

EP 09 01 3318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | JP 2007 279203 A (SEIKO EPSON CORP) 25 October 2007 (2007-10-25) * the whole document * | 1-7 | INV. G02B1/11 ADD. G02B1/10 |
| Y | JP 2006 146025 A (FUJI PHOTO FILM CO LTD) 8 June 2006 (2006-06-08) * paragraph [0107] - paragraph [0117] * | 1-7 | |
| Y | JP 2006 113287 A (OLYMPUS CORP) 27 April 2006 (2006-04-27) * claims 1,2,5 * | 1-7 | |
| A | EP 0 224 375 A2 (MINNESOTA MINING & MFG [US]) 3 June 1987 (1987-06-03) * page 7, line 1 - line 22 * | 1-7 | |

TECHNICAL FIELDS
SEARCHED     (IPC)

G02B

The present search report has been drawn up for all claims

| Place of search | Date of completion of the search | Examiner |
|---|---|---|
| Munich | 7 January 2010 | Girardin, François |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 01 3318

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2010

| Patent document cited in search report | | Publication date | Patent family member(s) | | Publication date |
|---|---|---|---|---|---|
| JP 2007279203 | A | 25-10-2007 | NONE | | |
| JP 2006146025 | A | 08-06-2006 | NONE | | |
| JP 2006113287 | A | 27-04-2006 | NONE | | |
| EP 0224375 | A2 | 03-06-1987 | AU | 593276 B2 | 08-02-1990 |
| | | | AU | 6219586 A | 28-05-1987 |
| | | | BR | 8605716 A | 18-08-1987 |
| | | | CA | 1262557 A1 | 31-10-1989 |
| | | | CN | 86107671 A | 15-07-1987 |
| | | | DE | 3686755 D1 | 22-10-1992 |
| | | | DE | 3686755 T2 | 01-04-1993 |
| | | | JP | 2037961 C | 28-03-1996 |
| | | | JP | 7076127 B | 16-08-1995 |
| | | | JP | 62124942 A | 06-06-1987 |
| | | | MX | 167083 B | 03-03-1993 |
| | | | US | 4772511 A | 20-09-1988 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007279203 A